# EUROPÄISCHE PATENTANMELDUNG

(11) **EP 4 001 178 A1**
(43) Veröffentlichungstag der Anmeldung: **25.05.2022**
(21) Anmeldenummer: 20208076.8
(22) Anmeldetag: 17.11.2020
(51) Int. Cl.: B65G 15/58, B65G 17/46

(54) **FÖRDERVORRICHTUNG UND VERFAHREN ZUM FÖRDERN VON STÜCKGÜTERN**

(71) Anmelder: Uhlmann Pac-Systeme GmbH & Co. KG, 88471 Laupheim (DE)
(72) Erfinder: Hähnel, Bernd, 76297 Stutensee (DE); Huchler, Joachim, 88484 Gutenzell (DE); Heim, Ralf, 88471 Laupheim (DE); Kleine-Hegermann, David, 46282 Dorsten (DE); Bräunig, Tim, 89231 Neu-Ulm (DE)
(74) Vertreter: Wächter, Jochen

(57) **Zusammenfassung**

Eine erfindungsgemäße Fördervorrichtung (2) umfasst eine Mehrzahl von Aufnahmen (6) zur Aufnahme von jeweils zumindest einem Stückgut (4), wobei jede Aufnahme (6) eine erste und eine zweite Begrenzungseinrichtung (8, 10) umfasst, die in Förderrichtung (F) hintereinander angeordnet sind und die jeweilige Aufnahme (6) nach begrenzen. Die erste und die zweite Begrenzungseinrichtung (8, 10) sind parallel zur Förderrichtung (F) relativ zueinander bewegbar. Die erste und/oder die zweite Begrenzungseinrichtung (8) weist zumindest ein Klemmmittel (12) auf, das die jeweilige Aufnahme (6) parallel zur Förderrichtung (F) im Bereich der ersten bzw. zweiten Begrenzungseinrichtung (8) begrenzt und das ein elastisches Element (14) umfasst.

## Beschreibung

Die vorliegende Erfindung betrifft eine Fördervorrichtung und ein Verfahren zum Fördern von Stückgütern. Die vorliegende Erfindung betrifft insbesondere eine Fördervorrichtung, wie zum Beispiel ein endlos umlaufendes Taktband, und ein Verfahren zum Fördern von Blisterpackungen, aber auch von anderen Verpackungen für medizinische oder pharmazeutische Produkte, wie zum Beispiel Faltschachteln oder Vials.

Stückgüter werden während ihres Herstellungs-, Füll- und/oder Verpackungsprozesses mittels einer oder mehrerer Fördervorrichtungen entlang eines vorgegebenen Pfads durch eine Maschine bewegt. Dabei können die Stückgüter einzeln oder in Gruppen in entsprechenden Aufnahmen der Fördervorrichtung aufgenommen sein.

Aus der WO 02/100744 A1 ist beispielsweise eine Fördervorrichtung für als Behälter ausgebildete Stückgüter bekannt, bei der jeweils ein Stückgut in einer Aufnahme aufgenommen ist. Jede Aufnahme ist dabei durch ein vorderes und ein hinteres Begrenzungselement gebildet. Um die Aufnahmen zum Einlegen eines Stückguts in eine Aufnahme zu öffnen oder die Größe der Aufnahmen schnell und einfach an die Größe der zu fördernden Stückgüter anzupassen, können die vorderen und hinteren Begrenzungselemente in Förderrichtung relativ zueinander bewegt werden. Der Abstand der Begrenzungselemente in Förderrichtung lässt sich so einstellen.

Aufgrund der gleichmäßigen Anordnung der vorderen bzw. hinteren Begrenzungselemente in der Fördervorrichtung sind die gebildeten Aufnahmen alle gleich groß. Weichen die Dimensionen der zu fördernden Stückgüter nun in Förderrichtung voneinander ab, zum Beispiel aufgrund von Fertigungstoleranzen, kann es vorkommen, dass einzelne Stückgüter in Förderrichtung kleiner sind als die jeweilige Aufnahme. Durch die Dynamik des Fördervorgangs kann dies wiederum insbesondere bei getaktet betriebenen Fördervorrichtungen dazu führen, dass sich solche Stückgüter in der jeweiligen Aufnahme bewegen und beispielsweise quer zur Förderrichtung verschieben. Es kann daher nicht sichergestellt werden, dass sich die geförderten Stückgüter an einem Auslauf der Fördervorrichtung in einer definierten Position befinden.

Es ist daher eine Aufgabe der vorliegenden Erfindung, eine Vorrichtung und ein Verfahren zum Fördern von Stückgütern bereitzustellen, die möglichst einfach und formatunabhängig eine genaue Positionierung der geförderten Stückgüter in der Fördervorrichtung ermöglichen.

Diese Aufgabe wird durch die Merkmale der Ansprüche 1 und 9 gelöst. Bevorzugte Ausführungsformen sind Gegenstand der jeweiligen Unteransprüche.

Eine erfindungsgemäße Fördervorrichtung zum Fördern von Stückgütern in eine Förderrichtung umfasst eine Mehrzahl von Aufnahmen zur Aufnahme von jeweils zumindest einem Stückgut, wobei die Mehrzahl von Aufnahmen in Förderrichtung bewegbar und in Förderrichtung hintereinander angeordnet ist. Jede Aufnahme der Mehrzahl von Aufnahmen umfasst eine erste Begrenzungseinrichtung und eine zweite Begrenzungseinrichtung, die in Förderrichtung hintereinander angeordnet sind und die jeweilige Aufnahme parallel zur Förderrichtung nach vorne und nach hinten begrenzen, wobei die erste Begrenzungseinrichtung und die zweite Begrenzungseinrichtung parallel zur Förderrichtung relativ zueinander bewegbar sind. Die erste Begrenzungseinrichtung und/oder zweite Begrenzungseinrichtung weist ferner zumindest ein Klemmmittel auf, das die jeweilige Aufnahme parallel zur Förderrichtung im Bereich der ersten bzw. zweiten Begrenzungseinrichtung begrenzt und das ein elastisches Element umfasst, das dazu eingerichtet ist, eine Haltekraft auf das zumindest eine Stückgut bewirken.

Auf diese Art und Weise wird eine Fördervorrichtung bereitgestellt, bei der jede Aufnahme der Mehrzahl von Aufnahmen durch eine Relativbewegung der ersten und der zweiten Begrenzungseinrichtung zur Aufnahme von zumindest einem Stückgut geöffnet und zum Erfassen des zumindest einen aufgenommenen Stückguts geschlossen werden kann, wobei das zumindest eine Klemmmittel im geschlossenen Zustand der Aufnahme mittels des elastischen Elements eine Haltekraft auf das jeweilige Stückgut ausübt. Mit anderen Worten ist das Klemmmittel derart ausgebildet, dass es mittels des elastischen Elements eine Haltekraft auf das zumindest eine Stückgut ausübt. Die Haltekraft parallel zur Förderrichtung bewirkt, dass das jeweilige Stückgut auch quer zur Förderrichtung kraftschlüssig gehalten wird. Somit kann auf eine mechanische Seitenführung der Stückgüter verzichtet werden. Die Aufnahmen sind dadurch im Wesentlichen formatunabhängig ausgebildet. Dennoch kann jedes aufgenommene Stückgut im Wesentlichen unabhängig von Größenabweichungen in Förderrichtung und im Wesentlichen unabhängig von seinem Format sicher in der jeweiligen Aufnahme aufgenommen und positioniert werden.

Es ist von Vorteil, wenn jedes Klemmmittel die jeweilige Aufnahme im Bereich der ersten bzw. zweiten Begrenzungseinrichtung in dem Bereich und bevorzugt ausschließlich in dem Bereich begrenzt, in dem ein zu förderndes Stückgut anzuordnen ist. Vorzugsweise ist daher jeweils ein Klemmmittel einem zu fördernden Stückgut zugeordnet.

Die erste Begrenzungseinrichtung und/oder die zweite Begrenzungseinrichtung weisen das zumindest eine Klemmmittel auf. Ist das zumindest eine Klemmmittel im Folgenden unter Bezugnahme auf nur eine der beiden Begrenzungseinrichtungen beschrieben, lassen sich diese Merkmale daher analog auch auf zumindest ein Klemmmittel an der jeweils anderen Begrenzungseinrichtung übertragen.

Das zumindest eine Klemmmittel ist grundsätzlich dazu eingerichtet, eine Haltekraft auf das in der jeweiligen Aufnahme aufgenommene zumindest eine Stückgut auszuüben. Die Haltekraft wird durch das elastische Element des zumindest einen Klemmmittels bewirkt. Mit anderen Worten ist die Haltekraft eine Federkraft, die das elastische Element erzeugt.

Es ist bevorzugt, dass der Federweg des elastischen Elements des zumindest einen Klemmmittels zumindest teilweise parallel zur Förderrichtung ausgerichtet ist. Der Federweg kann dabei schräg zur Förderrichtung verlaufen, solange die Richtung des Federwegs zumindest eine Komponente parallel zur Förderrichtung aufweist. Um die Haltekraft bevorzugt parallel zur Förderrichtung auf das zumindest eine Stückgut auszuüben, kann der Federweg des elastischen Elements des zumindest einen Klemmmittels jedoch parallel zur Förderrichtung ausgerichtet sein. Das Risiko einer Verschiebung des jeweiligen Stückguts quer zur Förderrichtung wird dadurch minimiert.

In einer Ausführungsform umfasst das zumindest eine Klemmmittel ein Klemmelement, das an die Aufnahme angrenzt und mittels des elastischen Elements elastisch gelagert. Das elastische Element kann als ein Federelement, wie z.B. als Zug- oder Druckfeder, ggf. mit entsprechender Führung, oder als Feder-Dämpfer-System ausgebildet sein. Es ist auch denkbar, dass das elastische Element eine hydraulische oder pneumatische Lagerung des zumindest einen Klemmelements bildet. Das elastische Element ist dann als Fluid ausgebildet.

Das Klemmelement ist auf diese Weise zumindest parallel zur Förderrichtung verschiebbar und federnd gelagert. Dabei kann das Klemmelement mittels des elastischen Elements linear verschiebbar oder schwenkbar gelagert sein. Folglich wird das Klemmelement beim Schließen der jeweiligen Aufnahme durch das zumindest eine aufgenommene Stückgut verschoben, wodurch das elastische Element durch das zumindest eine aufgenommene Stückgut verformt wird und das Klemmelement eine Federkraft auf das Stückgut ausübt.

In einer alternativen Ausführungsform bildet das elastische Element ein Klemmelement, das an die Aufnahme angrenzt. Mit anderen Worten ist das Klemmelement dann elastisch ausgebildet. Ein elastisch ausgebildetes Klemmelement ist zumindest parallel zur Förderrichtung elastisch verformbar. Folglich wird das Klemmelement beim Schließen der jeweiligen Aufnahme durch das zumindest eine aufgenommene Stückgut verformt, wodurch das Klemmelement eine Federkraft auf das Stückgut ausübt.

Grundsätzlich kann das elastische Element ein lineares oder ein nicht-lineares Verhalten, also eine lineare oder eine nicht-lineare Federkennlinie aufweisen.

In einer bevorzugten Ausführungsform ist das zumindest eine Klemmmittel parallel zur Förderrichtung zwischen einer ersten Erstreckung und einer zweiten Erstreckung bewegbar. Der Betrag einer Differenz zwischen der zweiten Erstreckung und der ersten Erstreckung entspricht einem Federweg des Klemmmittels bzw. des elastischen Elements parallel zur Förderrichtung. Der Federweg wiederum bestimmt die Federkraft des zumindest einen Klemmmittels und somit die auf das zumindest eine aufgenommene Stückgut wirkende Halte kraft.

Je nach Ausführungsform des zumindest einen Klemmmittels wird dies auf unterschiedliche Art und Weise erreicht. Ist das Klemmelement des zumindest einen Klemmmittels elastisch ausgebildet, ist es zumindest zwischen der ersten Erstreckung und der zweiten Erstreckung verformbar. Ist das Klemmelement des zumindest einen Klemmmittels elastisch gelagert, ist es zumindest zwischen der ersten Erstreckung und der zweiten Erstreckung verschiebbar. Die Differenz zwischen der zweiten Erstreckung und der ersten Erstreckung entspricht vorzugsweise zumindest der Differenz zwischen einer zulässigen maximalen und einer zulässigen minimalen Dimension der zu fördernden Stückgüter in Förderrichtung.

Die erste und die zweite Erstreckung sind gegenüber einer ursprünglichen Erstreckung definiert. In der ursprünglichen Erstreckung befindet sich das Klemmmittel in einem vollständig entspannten Zustand, in dem keine äußeren Kräfte auf das Klemmmittel wirken.

Die erste Erstreckung kann der ursprünglichen Erstreckung entsprechen. Vorzugsweise ist das zumindest eine Klemmmittel jedoch vorgespannt. Dadurch wirkt bereits bei minimaler Auslenkung des zumindest einen Klemmmittels, die auftritt, wenn ein Stückgut mit minimal zulässiger Dimension aufgenommen wird, eine ausreichende Haltekraft auf das Stückgut.

Eine Vorspannung kann erreicht werden, indem die erste Erstreckung ungleich der ursprünglichen Erstreckung ist und das Klemmmittel in der ersten Erstreckung gehalten wird. Die Differenz zwischen der ursprünglichen Erstreckung und der ersten Erstreckung wird durch das elastische Element aufgenommen, wodurch dieses verformt wird und eine Vorspannkraft bewirkt. Beispielsweise ist die erste Erstreckung kleiner als die ursprüngliche Erstreckung und das elastische Element im vorgespannten Zustand komprimiert.

Das zumindest eine Klemmmittel kann weiterhin ein Anschlagelement aufweisen, das die Auslenkung des Klemmmittels begrenzt. Zum Beispiel kann das Anschlagelement die erste Erstreckung definieren. Das Anschlagelement ist dann derart ausgebildet ist, dass es im unbelasteten Zustand des Klemmmittels das Klemmmittel bzw. das Klemmelement in der ersten Erstreckung hält und eine Bewegung des Klemmmittels bzw. Klemmelements aus der ersten Erstreckung in die zweite Erstreckung erlaubt.

Das Anschlagelement kann zusätzlich oder alternativ die zweite Erstreckung oder eine minimale Erstreckung des Klemmmittels definieren, die vorzugsweise bei maximaler Auslenkung des Klemmmittels vorliegt. In diesem Fall erlaubt das Anschlagelement eine Bewegung des Klemmmittels in die zweite oder die minimale Erstreckung, stößt dann an einen Anschlag und begrenzt dadurch die Bewegung des Klemmmittels bzw. Klemmelements. Um das zumindest ein Klemmmittel besonders einfach zu gestalten, einen einfachen Austausch desselben bei Verschleiß sowie eine gezielte Einstellbarkeit der Elastizität zu ermöglichen, umfasst das zumindest eine Klemmmittel in einer bevorzugten Ausführungsform ein Festkörpergelenk.

Das Festkörpergelenk ermöglicht eine Relativbewegung zwischen zwei im Wesentlichen starren Abschnitten des Klemmmittels durch Biegung. Das Festkörpergelenk basiert auf dem Prinzip der Elastizität. Bevorzugt ist das elastische Element des Klemmmittels daher Bestandteil des Festkörpergelenks. Die Funktion des Festkörpergelenks kann beispielsweise durch einen Abschnitt erreicht werden, der relativ zu zwei angrenzenden Abschnitten eine geringere Biegesteifigkeit aufweist. Die verminderte Biegesteifigkeit wird beispielsweise durch eine Querschnittsverringerung erzeugt.

Auf diese Weise sind die zwei Abschnitte relativ zueinander beweglich gelagert, da das Klemmmittel zumindest im Bereich des Festkörpergelenks elastisch ausgebildet ist, vorzugsweise durch das elastische Element.

In einer möglichen Ausführungsform umfasst das zumindest eine Klemmmittel einen festgelegten ersten Abschnitt und einen zweiten Abschnitt, der relativ zum ersten Abschnitt bewegbar, vorzugsweise schwenkbar ist. Der zweite Abschnitt bildet bevorzugt das Klemmelement des zumindest einen Klemmmittels.

Dass der erste Abschnitt festgelegt ist, bedeutet, dass der erste Abschnitt vorzugsweise an einer Komponente der ersten Begrenzungseinrichtung befestigt ist und insbesondere nicht relativ zu dieser Komponente bewegbar ist. Bevorzugt ist der erste Abschnitt aber lösbar an der Komponente der ersten Begrenzungseinrichtung angebracht, um einen einfachen Austausch des Klemmmittels bei Verschleiß zu ermöglichen. Hierzu sind verschiedene form- oder kraftschlüssige Verbindungsmöglichkeiten anwendbar.

Eine besonders einfache, kostengünstige und in der Regel ohne Werkzeug (de-) montierbare Verbindung kann durch eine Schnappverbindung hergestellt werden, bei der eine vorstehende Stelle eines Teils bei der Montage kurzfristig ausgelenkt wird und in eine Vertiefung des Verbindungspartners einrastet. Zum Beispiel umfasst das zumindest eine Klemmmittel einen oder zwei federnde Haken, die in eine Öffnung der Komponente der ersten Begrenzungseinrichtung eingefügt werden und dort einrasten.

Besonders bevorzugt umfasst das Klemmmittel einen Verbindungsabschnitt, der den ersten und den zweiten Abschnitt bewegbar miteinander verbindet, einen geringeren Querschnitt als der erste und der zweite Abschnitt aufweist und vorzugsweise integral mit dem ersten und dem zweiten Abschnitt ausgebildet ist. Vorzugsweise bildet das elastische Element den Verbindungsabschnitt. So kann das Klemmmittel möglichst einfach ein Festkörpergelenk umfassen.

Der Verbindungsabschnitt des Klemmmittels ermöglicht zunächst die Relativbewegung zwischen dem ersten und dem zweiten Abschnitt, z.B. ähnlich einem Scharnier. Bildet das elastische Element den Verbindungsabschnitt, kann dieser zusätzlich auch die Elastizität des Klemmmittels bereitstellen und definiert die Federeigenschaften des Klemmmittels.

Dass die erste und die zweite Begrenzungseinrichtung parallel zur Förderrichtung relativ zueinander bewegbar sind, wird unabhängig von der Verformung des elastischen Elements und der Erstreckung des Klemmmittels in Förderrichtung erreicht.

Vielmehr sind die erste und die zweite Begrenzungseinrichtung jeweils in ihrer Gesamtheit relativ zueinander parallel zur Förderrichtung bewegbar. Diese erste Relativbewegung wird zum Einstellen des Abstands zwischen der ersten und der zweiten Begrenzungseinrichtung und somit zum Öffnen und Schließen der Mehrzahl von Aufnahmen eingesetzt.

Die Verformung des elastischen Elements bzw. die dadurch bedingte Bewegung des Klemmelements bildet eine zweite Relativbewegung zwischen dem Klemmelement und einer weiteren Komponente der ersten Begrenzungseinrichtung ab, die zum Erzeugen der Haltekraft auf das aufgenommene Stückgut eingesetzt und während dem Schließen der Mehrzahl von Aufnahmen erzeugt wird.

Die zweite Begrenzungseinrichtung kann der ersten Begrenzungseinrichtung in Förderrichtung vorauseilen. Alternativ kann aber auch die erste Begrenzungseinrichtung der zweiten Begrenzungseinrichtung in Förderrichtung vorauseilen. Es sind auch Ausführungsformen denkbar, in denen sowohl die erste als auch die zweite Begrenzungseinrichtung zumindest ein Klemmmittel aufweisen.

Beispielsweise umfasst die erste Begrenzungseinrichtung ein Trägerelement, das sich quer zur Förderrichtung erstreckt, wobei das zumindest eine Klemmmittel am Trägerelement angebracht bzw. gelagert ist. Genauer ist ein elastisch ausgebildetes Klemmelement am Trägerelement angebracht, während ein elastisch gelagertes Klemmelement mittels des elastischen Elements im oder am Trägerelement gelagert ist. Auch dies kann natürlich umfassen, dass zumindest ein Teil des Klemmmittels am Trägerelement angebracht ist. Das zumindest eine Klemmmittel ist folglich zumindest teilweise relativ zum Trägerelement bewegbar (zweite Relativbewegung). Weist das zumindest eine Klemmmittel einen ersten und einen zweiten Abschnitt auf, wie oben beschrieben, ist der erste Abschnitt bevorzugt am Trägerelement festgelegt und der zweite Abschnitt ist relativ zum Trägerelement bewegbar.

Vorzugsweise erstreckt sich das Trägerelement über die gesamte Breite der Aufnahme quer zur Förderrichtung. An einem Trägerelement kann auch eine Mehrzahl von Klemmmitteln angebracht bzw. gelagert sein.

Die zweite Begrenzungseinrichtung umfasst bevorzugt ein Begrenzungselement, das sich quer zur Förderrichtung erstreckt und die jeweilige Aufnahme im Bereich der zweiten Begrenzungseinrichtung begrenzt. Vorzugsweise erstreckt sich das Begrenzungselement über die gesamte Breite der Aufnahme quer zur Förderrichtung.

Die Relativbewegung zwischen der ersten und der zweiten Begrenzungseinrichtung parallel zur Förderrichtung (erste Relativbewegung) erfolgt vorzugsweise zwischen dem Trägerelement der ersten Begrenzungseinrichtung und dem Begrenzungselement der zweiten Begrenzungseinrichtung.

Je nach Gestalt der zu fördernden Stückgüter kann es sein, dass eine Kontaktstelle des zumindest einen Klemmmittels und insbesondere des Klemmelements des zumindest einen Klemmmittels zum jeweiligen Stückgut sehr klein ist und dadurch lokal hohe Belastungen wirken, die zum Verschleiß des Klemmmittels führen können. Sind die Stückgüter beispielsweise Blisterpackungen, so trifft das Klemmmittel lediglich auf einen kleinen Abschnitt einer Kante einer solchen Blisterpackung. Je nach Geometrie des Klemmmittels ergibt sich dabei ein punkt- oder linienförmiger Kontakt. Erhöhter Verschleiß wird weiterhin begünstigt, wenn das Material des Klemmmittels im Verhältnis zum Material der Stückgüter weich ist.

In einer bevorzugten Ausführungsform weist das zumindest eine Klemmmittel, vorzugsweise am Klemmelement, einen Kontaktabschnitt zur Anlage an das zumindest eine Stückgut auf, das in der jeweiligen Aufnahme angeordnet ist, und der Kontaktabschnitt ist mit einem Verschleißschutz versehen. Dadurch ist der Kontaktabschnitt des Klemmmittels zum zu fördernden Stückgut gegen erhöhten Verschleiß geschützt.

Der Verschleißschutz kann zum Beispiel als ein separates Element ausgebildet sein, das im Kontaktabschnitt mit dem Klemmmittel verbunden oder in dieses eingelassen ist. Der Verschleißschutz kann auch als Beschichtung im Kontaktabschnitt ausgebildet sein. Weiterhin ist denkbar, dass das Klemmmittel bzw. das Klemmelement im Kontaktabschnitt aus einem anderen Material oder einer anderen Materialzusammensetzung gebildet ist, als das übrige Klemmmittel. In jedem Fall ist der Verschleißschutz widerstandsfähiger, vorzugsweise härter, als das übrige Klemmmittel.

Ist der Verschleißschutz als separates Element, z.B. als Stift oder Plättchen, ausgebildet, kann dieses fest oder lösbar mit dem Klemmmittel verbunden sein. Zum Beispiel ist das separate Element teilweise in einer Aussparung im Klemmmittel aufgenommen und liegt im Kontaktabschnitt zum Kontaktieren des Stückguts frei. In der zuvor beschriebenen Ausführungsform, in der das Klemmmittel einen ersten und einen zweiten Abschnitt umfasst, ist der Verschleißschutz vorzugsweise in einer Aussparung im zweiten Abschnitt aufgenommen. Der Verschleißschutz kann formschlüssig in der Aussparung aufgenommen sein.

Der Verschleißschutz kann aus Metall, insbesondere aus gehärtetem Stahl, oder aus hartem Kunststoff gebildet sein.

Vorzugsweise umfasst die erste Begrenzungseinrichtung eine Mehrzahl von Klemmmitteln, die quer zur Förderrichtung nebeneinander angeordnet sind. Jede Aufnahme der Mehrzahl von Aufnahmen ist dadurch zur Aufnahme einer Mehrzahl von Stückgütern eingerichtet, die quer zur Förderrichtung nebeneinander angeordnet sind, wobei jedem Stückgut ein Klemmmittel zugeordnet ist. Dadurch wird jedes aufgenommene Stückgut zuverlässig gehalten und positioniert unabhängig davon, wie die Dimension der einzelnen Stückgüter in einer Aufnahme voneinander abweichen.

Die Fördervorrichtung kann ein Förderband umfassen, das endlos umläuft und mittels eines Antriebs angetrieben, vorzugsweise getaktet angetrieben wird. In einer Ausführungsform kann das Förderband ein erstes und ein zweites Band umfassen, die separat ausgebildet sind und zumindest abschnittsweise parallel zueinander in Förderrichtung verlaufen. Das erste und das zweite Band sind unabhängig voneinander antreibbar, sodass eine Relativbewegung zwischen dem ersten und dem zweiten Band möglich ist. Beispielsweise wird das erste Band von einem ersten Antrieb und das zweite Band von einem zweiten Antrieb angetrieben.

In dieser Ausführungsform kann jede erste Begrenzungseinrichtung der Mehrzahl von Aufnahmen mit dem ersten Band und jede zweite Begrenzungseinrichtung der Mehrzahl von Aufnahmen mit dem zweiten Band gekoppelt sein. Beispielsweise ist das Trägerelement jeder ersten Begrenzungseinrichtung am ersten Band und das Begrenzungselement jeder zweiten Begrenzungseinrichtung am zweiten Band festgelegt. Eine Relativbewegung zwischen dem ersten und dem zweiten Band resultiert folglich in einer Relativbewegung zwischen der ersten und der zweiten Begrenzungseinrichtung (erste Relativbewegung) zum Öffnen und Schließen der Mehrzahl von Aufnahmen. Zum Fördern der Stückgüter in Förderrichtung werden das erste und das zweite Band synchron bewegt.

Bevorzugt bildet die Fördervorrichtung ein Taktband einer Blistermaschine, wobei die Stückgüter Blisterpackungen sind, wobei vorzugsweise jeweils eine Mehrzahl von Blisterpackungen in einer Aufnahme aufgenommen ist.

Ein erfindungsgemäßes Verfahren zum Fördern von Stückgütern in eine Förderrichtung mittels einer Fördervorrichtung, die eine Mehrzahl von in Förderrichtung hintereinander angeordneten Aufnahmen umfasst, umfasst die folgenden Schritte:
a) Anordnen einer ersten und einer zweiten Begrenzungseinrichtung zumindest einer Aufnahme der Mehrzahl von Aufnahmen, wobei ein Abstand der ersten und der zweiten Begrenzungseinrichtung in Förderrichtung einem ersten Abstand entspricht, wobei der erste Abstand mindestens einer maximalen Dimension der Stückgüter in Förderrichtung entspricht;
b) Aufnehmen eines Stückguts in der zumindest einen Aufnahme;
c) Bewegen der ersten Begrenzungseinrichtung und der zweiten Begrenzungseinrichtung relativ zueinander parallel zur Förderrichtung, wenn das Stückgut in der zumindest einen Aufnahme aufgenommen ist;
d) Verformen eines elastischen Elements eines Klemmmittels durch das aufgenommene Stückgut während Schritt c), wobei die erste Begrenzungseinrichtung und/oder die zweite Begrenzungseinrichtung das Klemmmittel aufweist und das Klemmmittel die jeweilige Aufnahme im Bereich der ersten Begrenzungseinrichtung bzw. zweiten Begrenzungseinrichtung parallel zur Förderrichtung begrenzt;
e) Erzeugen einer Haltekraft, die parallel zur Förderrichtung auf das aufgenommene Stückgut wirkt, durch das Verformen des elastischen Elements des Klemmmittels.

Auf diese Art und Weise wird ein Verfahren bereitgestellt, bei dem jede Aufnahme der Mehrzahl von Aufnahmen durch eine Relativbewegung der ersten und der zweiten Begrenzungseinrichtung zur Aufnahme von zumindest einem Stückgut geöffnet und geschlossen werden kann, wobei das Klemmmittel im geschlossenen Zustand der Aufnahme mittels des elastischen Elements eine Haltekraft auf das jeweilige Stückgut ausübt. So kann jedes aufgenommene Stückgut im Wesentlichen unabhängig von Größenabweichungen in Förderrichtung und im Wesentlichen unabhängig von seinem Format sicher in der jeweiligen Aufnahme aufgenommen und positioniert werden.

Der Abstand der ersten und der zweiten Begrenzungseinrichtung ist parallel zur Förderrichtung zwischen den Punkten der ersten und der zweiten Begrenzungseinrichtung definiert, die die jeweilige Aufnahme auf der Seite der ersten bzw. zweiten Begrenzungseinrichtung begrenzen und somit beim Schließen der Aufnahme das Stückgut als erstes berühren. Z.B. ist der Abstand zwischen einem Kontaktabschnitt des zumindest einen Klemmmittels der ersten Begrenzungseinrichtung und einem Kontaktabschnitt des Begrenzungselements der zweiten Begrenzungseinrichtung definiert, die dazu eingerichtet sind, das jeweilige Stückgut zu erfassen.

Es ist von besonderem Vorteil, wenn das erfindungsgemäße Verfahren mittels einer erfindungsgemäßen Fördervorrichtung ausgeführt wird, wie sie hierin beschrieben ist. Alle bezüglich der erfindungsgemäßen Fördervorrichtung und ihrer Komponenten beschriebenen Merkmale und Vorteile lassen sich daher analog auf das erfindungsgemäße Verfahren übertragen bzw. als Verfahrensschritte formulieren und umgekehrt.

Die zu fördernden Stückgüter weisen eine Soll-Dimension Sₛₒₗₗ auf, die beim Transport durch die Fördervorrichtung parallel zur Förderrichtung ausgerichtet ist. Aufgrund von Toleranzen kann die tatsächliche Dimension Sᵢₛₜ jedes Stückguts in Förderrichtung von dieser Soll-Dimension Sₛₒₗₗ abweichen. Üblicherweise ist ein Toleranzbereich zwischen einer zulässigen minimalen Dimension Sₘᵢₙ und der zulässigen maximalen Dimension Sₘₐₓ um die Soll-Dimension Sₛₒₗₗ vorgegeben, in dem die tatsächliche Dimension Sᵢₛₜ liegen muss. Der Toleranzbereich beträgt vorzugsweise +/- 0,5 mm um die Soll-Dimension S_{Soll}. Die minimale Dimension Sₘᵢₙ ist folglich 0,5 mm kleiner und die maximale Dimension Sₘₐₓ 0,5 mm größer als die Soll-Dimension S_{Soll}. Die tatsächliche Dimension Sᵢₛₜ der Stückgüter in Förderrichtung beträgt vorzugsweise zwischen 10 mm und 200 mm, mehr bevorzugt zwischen 15 mm und 150 mm, noch mehr bevorzugt zwischen 20 mm und 100 mm.

Dadurch, dass gemäß Schritt d) jedes aufgenommene Stückgut das jeweilige elastische Element verformt, wirkt durch das jeweilige Klemmmittel eine Haltekraft auf alle transportierten Stückgüter, unabhängig von der tatsächlichen Dimension des jeweiligen Stückguts in Förderrichtung. Jedes Stückgut wird somit in seiner Position innerhalb der Aufnahme gesichert und eine laterale Verschiebung der Stückgüter während des Transports kann vermieden werden.

Das Aufnehmen zumindest eines Stückguts in jeweils einer Aufnahme gemäß Schritt b) umfasst das Einlegen des Stückguts in die Aufnahme. Dabei befinden sich die erste und die zweite Begrenzungseinrichtung gemäß Schritt a) im ersten Abstand, der mindestens der maximalen Dimension Sₘₐₓ der Stückgüter in Förderrichtung entspricht, sodass das Stückgut möglichst einfach einzulegen ist. Bevorzugt steht die Fördervorrichtung während Schritt b) still.

Die erste und die zweite Begrenzungseinrichtung bewegen sich gemäß Schritt c) aufeinander zu, wodurch das zumindest eine aufgenommene Stückgut durch die erste und die zweite Begrenzungseinrichtung erfasst wird. Vorzugsweise werden die erste und die zweite Begrenzungseinrichtung während des gesamten Schritts c) kontinuierlich relativ zueinander bewegt, also sowohl vor als auch nach dem Kontakt zum zumindest einen Stückgut.

Es ist weiterhin von Vorteil, wenn Schritt c) das Bewegen der ersten Begrenzungseinrichtung und der zweiten Begrenzungseinrichtung um einen Differenzbetrag umfasst, der mindestens der Differenz aus dem ersten Abstand und der minimalen Dimension Sₘᵢₙ der Stückgüter in Förderrichtung entspricht. Dadurch wird sichergestellt, dass die Haltekraft auch auf Stückgüter mit minimaler Dimension Sₘᵢₙ in Förderrichtung wirkt.

Sobald der Abstand der ersten und der zweiten Begrenzungseinrichtung der tatsächlichen Dimension Sᵢₛₜ des aufgenommenen Stückguts in Förderrichtung entspricht, erfolgt das Verformen des elastischen Elements des Klemmmittels gemäß Schritt d). D. h., dass das elastische Element des Klemmmittels, das dem jeweiligen Stückgut zugeordnet ist, gemäß Schritt d) verformt wird, wenn sich die erste und die zweite Begrenzungseinrichtung gemäß Schritt c) weiter aufeinander zu bewegen, sobald die erste und die zweite Begrenzungseinrichtung am zumindest einen Stückgut anliegen. Das Verformen gemäß Schritt d) kann das Verformen eines elastisch ausgebildeten Klemmelements des Klemmmittels oder das Verschieben eines elastisch gelagerten Klemmelements des Klemmmittels und das dadurch bedingte Verformen des elastischen Elements umfassen.

Das Verformen des elastischen Elements bewirkt eine Haltekraft gemäß Schritt e), die parallel zur Förderrichtung auf das aufgenommene Stückgut wirkt.

Die Haltekraft, die ein Klemmmittel auf ein Stückgut ausübt, beträgt vorzugsweise zwischen 0,5 N und 10 N, mehr bevorzugt zwischen 1 N und 5 N, noch mehr bevorzugt zwischen 1 N und 3 N. Es hat sich herausgestellt, dass bereits eine Haltekraft dieser Größenordnung ausreicht, um die Position des Stückguts zu sichern und insbesondere eine Verschiebung des Stückguts quer zur Förderrichtung zu verhindern. Zudem werden die Stückgüter durch eine geringe Haltekraft geschont und auch der Verschleiß der Klemmmittel kann reduziert werden.

In einer bevorzugten Ausführungsform weist das elastische Element vor Schritt c) eine erste Erstreckung parallel zur Förderrichtung und nach Schritt c) und d) eine zweite Erstreckung parallel zur Förderrichtung auf, wobei ein Differenzbetrag zwischen der ersten Erstreckung und der zweiten Erstreckung einem Federweg des elastischen Elements parallel zur Förderrichtung entspricht. Bezüglich der ersten und der zweiten Erstreckung sowie des Federwegs wird auf die entsprechenden Ausführungen zur erfindungsgemäßen Fördervorrichtung verwiesen, die analog auf das erfindungsgemäße Verfahren übertragbar sind.

Schließlich ist es bevorzugt, dass Schritt b) das Aufnehmen einer Mehrzahl von Stückgütern umfasst, die quer zur Förderrichtung nebeneinander angeordnet ist, wobei die erste und/oder die zweite Begrenzungseinrichtung eine Mehrzahl von Klemmmitteln aufweist und jedem Stückgut ein Klemmmittel zugeordnet ist. Schritt d) umfasst dann das Verformen jedes elastischen Elements der Mehrzahl von Klemmmitteln durch jeweils das Stückgut, dem das jeweilige Klemmmittel zugeordnet ist.

Weitere Merkmale und Vorteile der vorliegenden Erfindung ergeben sich aus der nachfolgenden Beschreibung unter Bezugnahme auf die beigefügten Figuren.
- Fig. 1 bis 3: zeigen in einer Seitenansicht schematisch eine erfindungsgemäße Fördervorrichtung während verschiedener Schritte des erfindungsgemäßen Verfahrens.
- Fig. 4: zeigt in einer perspektivischen Ansicht einen Ausschnitt einer Aufnahme einer erfindungsgemäßen Fördervorrichtung.
- Fig. 5a: zeigt in einer Draufsicht eine Ausführungsform eines Klemmmittels einer erfindungsgemäßen Fördervorrichtung.
- Fig. 5b: zeigt in einer Draufsicht eine alternative Ausführungsform eines Klemmmittels einer erfindungsgemäßen Fördervorrichtung.

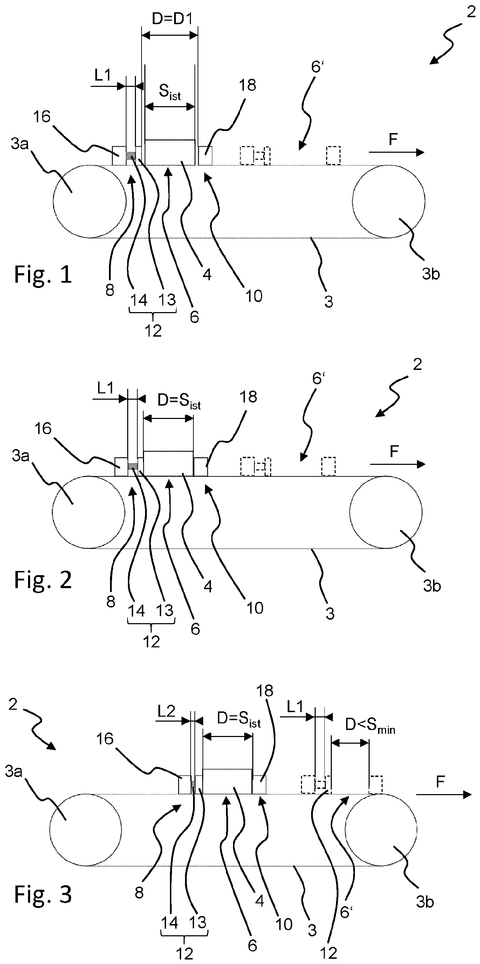

Die Fig. 1 bis 3 zeigen schematisch Bestandteile einer erfindungsgemäßen Fördervorrichtung 2 zum Fördern von Stückgütern 4 in eine Förderrichtung F. Die Fördervorrichtung 2 umfasst beispielsweise ein endloses Förderband 3, das um zwei Walzen 3a, 3b umläuft, von denen eine Walze angetrieben ist. Es können auch zwei senkrecht zur Zeichenebene nebeneinander angeordnete Förderbänder vorgesehen sein, die getrennt antreibbar sind, um eine Relativbewegung zwischen den zwei Förderbändern zu ermöglichen, wie eingangs beschrieben.

Die Fördervorrichtung 2 umfasst eine Mehrzahl von Aufnahmen 6 zur Aufnahme von jeweils zumindest einem Stückgut 4. Von der Mehrzahl von Aufnahmen 6 ist eine Aufnahme 6 detailliert dargestellt und beschrieben. Eine weitere Aufnahme 6' ist stellvertretend für eine oder mehrere weitere Aufnahmen der Mehrzahl von Aufnahmen 6 angedeutet, die entsprechend der detailliert beschriebenen Aufnahme 6 ausgebildet sind.

Jede Aufnahme 6 der Mehrzahl von Aufnahmen 6 umfasst eine erste Begrenzungseinrichtung 8 und eine zweite Begrenzungseinrichtung 10, die in Förderrichtung F hintereinander angeordnet sind. Die erste und die zweite Begrenzungseinrichtung 8, 10 begrenzen die Aufnahme 6 in einer Richtung parallel zur Förderrichtung F und sind parallel zur Förderrichtung F relativ zueinander bewegbar, wie aus einer Zusammenschau der Fig. 1 bis Fig. 3 ersichtlich. Insbesondere können die erste und die zweite Begrenzungseinrichtung 8, 10 parallel zur Förderrichtung F aufeinander zu und voneinander weg bewegt werden, um die Aufnahme 6 zum Erfassen zumindest eines Stückguts 4 zu schließen (Fig. 2, 3) bzw. zum Aufnehmen zumindest eines Stückguts 4 zu öffnen (Fig. 1). Im dargestellten Ausführungsbeispiel eilt die zweite Begrenzungseinrichtung 10 der ersten Begrenzungseinrichtung 8 in Förderrichtung F voraus. Alternativ kann aber auch die erste Begrenzungseinrichtung 8 der zweiten Begrenzungseinrichtung 10 in Förderrichtung F vorauseilen.

Die erste Begrenzungseinrichtung 8 weist zumindest ein Klemmmittel 12 auf, das die Aufnahme 6 in einer Richtung parallel zur Förderrichtung F im Bereich der ersten Begrenzungseinrichtung 8 begrenzt. Das Klemmmittel 12 umfasst ein elastisches Element 14.

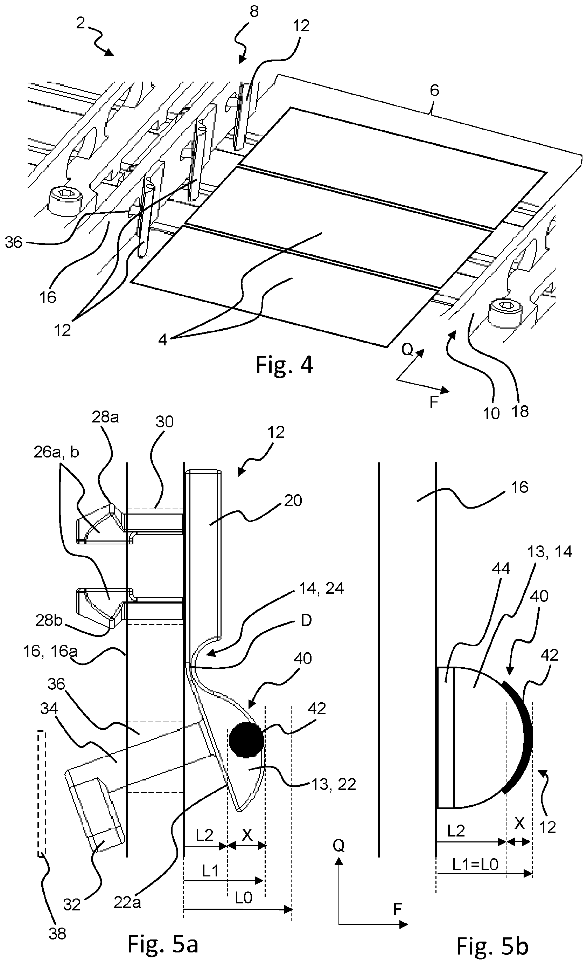

Im dargestellten Ausführungsbeispiel umfasst das Klemmmittel 12 ferner ein Klemmelement 13, das an die Aufnahme 6 angrenzt und mittels des elastischen Elements 14 elastisch gelagert ist. In dieser ersten Ausführungsform kann das elastische Element 14 als Federelement, z.B. als Druckfeder, ausgebildet sein. Alternative Ausführungsformen des Klemmmittels 12 sind unter Bezugnahme auf die Fig. 5a und 5b beschrieben und können ebenso verwendet werden, weshalb die Ausführungen zu den Fig. 1 bis 3 nicht auf die dargestellte Ausführungsform des Klemmmittels 12 beschränkt sind.

Die erste Begrenzungseinrichtung 8 kann ein Trägerelement 16 umfassen, das sich quer zur Förderrichtung F erstreckt. Das Klemmmittel 12 kann dann am Trägerelement 16 angebracht bzw. gelagert sein.

Die zweite Begrenzungseinrichtung 10 umfasst hier ein Begrenzungselement 18, das die Aufnahme 6 in einer Richtung parallel zur Förderrichtung F im Bereich der zweiten Begrenzungseinrichtung 10 begrenzt und das sich quer zur Förderrichtung F erstreckt. Vorzugsweise erstrecken sich das Trägerelement 16 und das Begrenzungselemente 18 quer zur Förderrichtung F über die gesamte Breite der Aufnahme 6.

Wie weiterhin aus einer Zusammenschau der Fig. 1 bis Fig. 3 ersichtlich ist, ist das Klemmmittel 12 derart ausgebildet, dass es sich zumindest teilweise relativ zur übrigen ersten Begrenzungseinrichtung 8 parallel zur Förderrichtung F verformen lässt.

In diesem Ausführungsbeispiel ist das elastische Element 14 im Wesentlichen parallel zur Förderrichtung F ausgerichtet, sodass das Klemmelement 13 bei Verformung des elastischen Elements 14 parallel zur Förderrichtung verschiebbar ist.

In einer alternativen Ausführungsform, wie sie unter Bezugnahme auf Fig. 5b beschrieben ist, kann das elastische Element 14 auch das Klemmelement 13 bilden, das an die Aufnahme 6 angrenzt. Das elastische Element 14 und somit das Klemmelement 13 sind dann parallel zur Förderrichtung F verformbar.

In beiden Fällen weist das Klemmmittel 12 bzw. das elastische Element 14 einen Federweg X auf, der zumindest teilweise in Förderrichtung F ausgerichtet ist, um parallel zur Förderrichtung F eine Haltekraft auf das zumindest eine Stückgut 4 zu bewirken.

Bezugnehmend auf Fig. 4 ist ein Ausschnitt der Aufnahme 6 perspektivisch dargestellt. Es ist zu erkennen, dass die erste Begrenzungseinrichtung 8 in diesem Fall eine Mehrzahl von Klemmmitteln 12 umfasst, die in einer Querrichtung Q der Fördervorrichtung 2, die senkrecht bzw. quer zur Förderrichtung F ausgerichtet ist, nebeneinander angeordnet sind. Die Querrichtung Q liegt ferner in einer Ebene, die parallel zu einer Ebene ausgerichtet ist, in der die Stückgüter 4 transportiert werden bzw. in der das Förderband 3 im Transportabschnitt verläuft. Die Aufnahme 6 kann somit eine Mehrzahl von Stückgütern 4 aufnehmen, die ebenfalls in Querrichtung Q nebeneinander angeordnet ist. Die Anzahl der Mehrzahl von Klemmmitteln 12 entspricht vorzugsweise der Anzahl der Mehrzahl von Stückgütern 4. Es ist somit jedem Stückgut 4 ein Klemmmittel 12 zugeordnet.

Alle Ausführungen hierin, die das Zusammenwirken eines Klemmmittels 12 und eines Stückguts 4 beschreiben, sind daher analog auf eine Mehrzahl von Stückgütern 4 und eine Mehrzahl von Klemmmitteln 12 übertragbar und umgekehrt.

Die zweite Begrenzungseinrichtung 10, hier mit dem Begrenzungselement 18, begrenzt die Aufnahme 6 in Förderrichtung F auf der voraneilenden Seite. Die erste Begrenzungseinrichtung 8 begrenzt die Aufnahme 6 mittels der Klemmmittel 12 auf der in Förderrichtung F nacheilenden Seite. In Fig. 4 ist die Aufnahme 6 zum Einlegen der Stückgüter 4 geöffnet, weshalb die Klemmmittel 12 und das Begrenzungselement 18 noch nicht an den Stückgütern anliegen.

In Fig. 5a ist ein Klemmmittel 12 gemäß einer zweiten Ausführungsform, wie es auch in Fig. 4 dargestellt ist, in einer Draufsicht zu sehen. Das Klemmmittel 12 umfasst einen festgelegten ersten Abschnitt 20 und einen zweiten Abschnitt 22, der relativ zum ersten Abschnitt 20 bewegbar ist. Der zweite Abschnitt 22 bildet hier zugleich ein Klemmelement 13, das an die Aufnahme 6 angrenzt. Ein Verbindungsabschnitt 24 des Klemmmittels 12 verbindet den ersten und den zweiten Abschnitt 20, 22 bewegbar miteinander.

In der dargestellten bevorzugten Ausführungsform sind der erste und der zweite Abschnitt 20, 22 um einen Drehpunkt D relativ zueinander schwenkbar. Dies wird durch den Verbindungsabschnitt 24 ermöglicht, der hier einen geringeren Querschnitt als der erste und der zweite Abschnitt 20, 22 aufweist und dadurch eine Biegung des Klemmmittels 12 zwischen dem ersten und dem zweiten Abschnitt 20, 22 erlaubt. Das Klemmmittel 12 umfasst somit ein Festkörpergelenk. Der Verbindungsabschnitt 24 bildet insbesondere das elastische Element 14 des Klemmmittels 12, das zum Erzeugen der Haltekraft verformt wird.

Das Klemmmittel 12 ist an einer Komponente der ersten Begrenzungseinrichtung 8 festgelegt. Hierzu kann der erste Abschnitt 20 des Klemmmittels 12 am Trägerelement 16 der ersten Begrenzungseinrichtung 8 befestigt sein, von dem in den Fig. 5a und 5b jeweils ein Ausschnitt dargestellt ist.

Bevorzugt ist eine lösbare Befestigung des zwischen Klemmmittels 12, um einen einfachen Austausch des Klemmmittels 12 bei Verschleiß zu ermöglichen. Dies wird in diesem Fall durch eine Schnappverbindung erzielt. Das Klemmmittel 12 weist deshalb zwei federnde Haken 26a, b auf, die in eine Öffnung 30 des Trägerelements 16 eingefügt werden und mittels jeweils eines Vorsprungs 28a, b der Haken 26a, b am Trägerelement 16 einrasten. Beim Einfügen in die Öffnung 30 werden die Haken 26a, b kurzzeitig aufeinander zu bewegt, wozu die Vorsprünge 28a, b vorzugsweise zu einem freien Ende der Haken 26a, b hin verjüngt ausgebildet sind. Sobald es die Vorsprünge 28a, b erlauben, federn die Haken 26a, b zurück und rasten somit ein. Dadurch kann das Klemmmittel 12 sehr einfach manuell und ohne Werkzeug am Trägerelement 16 angebracht und von diesem gelöst werden.

In Fig. 5a weist das Klemmmittel 12 parallel zur Förderrichtung F eine erste Erstreckung L1 auf. Eine zweite Erstreckung L2 des Klemmmittels 12, in die es mittels des aufgenommenen Stückguts 4 gebracht wird, ist durch eine gestrichelte Linie angedeutet. Die Differenz zwischen der ersten Erstreckung L1 und der zweiten Erstreckung L2 entspricht einem Federweg X des elastischen Elements 14 bzw. des Klemmmittels 12 parallel zur Förderrichtung F.

Das Klemmmittel 12 und insbesondere das Klemmelement 13 weisen eine ursprüngliche Erstreckung L0 auf, die in Fig. 5a ebenfalls gestrichelt angedeutet ist. Das Klemmmittel 12 kann so ausgebildet sein, dass die ursprüngliche Erstreckung L0 in einem entspannten Zustand des Klemmmittels 12 bzw. des elastischen Elements 14 vorliegt, in dem keine äußeren Kräfte auf das Klemmmittel 12 wirken. Ist das Klemmmittel 12 nicht vorgespannt, würde die erste Erstreckung L1 der ursprünglichen Erstreckung L0 entsprechen (siehe Fig. 5b).

In der dargestellten Ausführungsform ist das Klemmmittel 12 jedoch vorgespannt. Die erste Erstreckung L1 ist kleiner als die ursprüngliche Erstreckung L0. Alternativ ist denkbar, dass eine Stellung des Klemmmittels, wie sie durch die Erstreckung L2 angedeutet ist, der ursprünglichen Erstreckung entspricht und das Klemmmittel ausgehend davon in die erste Auslenkung L1 vorgespannt ist, beispielsweise mittels eines Federelements.

Das Klemmmittel 12 kann ein Anschlagelement 32 umfassen, das die Auslenkung des Klemmmittels 12 und hier insbesondere des zweiten Abschnitts 22 begrenzt. Ein Steg 34 erstreckt sich von einer Rückseite 22a des zweiten Abschnitts 22 durch eine Öffnung 36 im Trägerelement 16. Am Ende des Stegs 34 ist das Anschlagelement 32 ausgebildet, vorzugsweise als Fuß, der vom Steg 34 abragt.

Das Anschlagelement 32 kann die Auslenkung und somit die Erstreckung des Klemmmittels 12 wahlweise in und/oder entgegen der Förderrichtung F begrenzen. Im dargestellten Fall, begrenzt das Anschlagelement 32 die Auslenkung des Klemmmittels 12 in Förderrichtung F auf die erste Erstreckung L1, indem es an einer Rückseite 16a des Trägerelements 16 anliegt. Die Auslenkung des Klemmmittels 12 entgegen der Förderrichtung F wird z.B. auf die zweite Erstreckung L2 begrenzt, wenn das Anschlagelement 32 an einem Anschlag 38 der ersten Begrenzungseinrichtung 8 anliegt. Es versteht sich, dass auf den Anschlag 38 auch verzichtet werden kann, wenn das Klemmmittel 12 so weit ausgelenkt werden soll, dass die Rückseite 22a des zweiten Abschnitts 22 am Trägerelement 16 anliegt und dadurch die Auslenkung entgegen der Förderrichtung F begrenzt.

Schließlich weist das Klemmmittel 12 einen Kontaktabschnitt 40 zur Anlage an das zumindest eine Stückgut 4 auf. Um den Verschleiß des Klemmmittels 12 im Kontaktabschnitt 40 zu reduzieren, ist das Klemmmittel 12 im Kontaktabschnitt 40 bevorzugt mit einem Verschleißschutz 42 versehen. Der Verschleißschutz 42 ist in der dargestellten Ausführungsform als Stift ausgebildet, der teilweise im zweiten Abschnitt 22 des Klemmmittels 12 aufgenommen ist. Im Kontaktabschnitt 40 liegt der Stift 42 frei, sodass das Stückgut 4 das Klemmmittel 12 nur mittels des Stifts 42 kontaktiert. So ist es möglich, das Klemmmittel 12 im Übrigen aus einem Material zu bilden, das zumindest abschnittsweise elastisch verformbar ist, wie hier im Verbindungsabschnitt 24, der integral mit dem ersten und dem zweiten Abschnitt 20, 22 ausgebildet ist. Es versteht sich, dass der Verschleißschutz 42 auch andere Formen annehmen kann und beliebig in das Klemmmittel 12 eingebettet oder auf dieses aufgebracht werden kann.

In Fig. 5b ist ein Klemmmittel 12 gemäß einer dritten Ausführungsform schematisch in einer Draufsicht dargestellt. Das Klemmmittel 12 gemäß der dritten Ausführungsform umfasst ein elastisch ausgebildetes Klemmelement 13, das zugleich das elastische Element 14 des Klemmmittels 12 bildet. Beispielsweise weist das Klemmelement 13 einen im Wesentlichen halbkreisförmigen oder kissenförmigen Querschnitt auf und ist aus einem elastischen Material, wie zum Beispiel Gummi, gebildet. Zur einfacheren Handhabung und Verbindung mit einer Komponente der ersten Begrenzungseinrichtung 8 kann das Klemmmittel 12 ferner einen Sockel 44 aufweisen, der am Trägerelement 16 angebracht ist. Das Klemmmittel 12 ist auch hier festgelegt, vorzugsweise jedoch lösbar mit der entsprechenden Komponente, hier dem Trägerelement 16, verbunden. Verschiedene Verbindungsarten sind denkbar und es sei beispielsweise auf die Schnappverbindung nach Fig. 5a verwiesen, die auch hier Anwendung finden kann.

Auch für diese Ausführungsform sind die ursprüngliche Erstreckung L0, die erste Erstreckung L1 und die zweite Erstreckung L2 des Klemmmittels 12 gekennzeichnet. Das Klemmmittel 12 ist hier nicht vorgespannt, sodass die erste Erstreckung L1 der ursprünglichen Erstreckung L0 entspricht. Im Übrigen sei bezüglich der Erstreckung des Klemmmittels 12 auf die obigen Ausführungen verwiesen.

Der Verschleißschutz 42 im Kontaktabschnitt 40 des Klemmmittels 12 nach Fig. 5b kann ebenfalls analog zum Verschleißschutz 42 nach Fig. 5a ausgebildet sein. Dargestellt ist aber ein alternativer Verschleißschutz 42, der als Beschichtung des Klemmmittels 12 im Kontaktabschnitt 40 ausgebildet ist. Die Beschichtung kann auf das Klemmmittel 12 aufgebracht und zum Beispiel mit diesem verklebt oder in das Klemmmittel 12 eingelassen sein. Natürlich kann dieser alternative Verschleißschutz 42 auch bei der Ausführungsform des Klemmmittels 12 nach Fig. 5a verwendet werden.

Das erfindungsgemäße Verfahren wird nun unter Bezugnahme auf die Fig. 1 bis 3 beschrieben.

Wie in Fig. 1 zu sehen, werden die erste und die zweite Begrenzungseinrichtung 8, 10 der Aufnahme 6 zunächst derart angeordnet, dass ein Abstand D der ersten und der zweiten Begrenzungseinrichtung 8, 10 in Förderrichtung F einem ersten Abstand D1 entspricht (Schritt a). Um sicherzustellen, dass die Stückgüter 4 möglichst einfach in die Aufnahmen 6 eingelegt werden können, entspricht der erste Abstand D1 mindestens einer maximalen Dimension Sₘₐₓ der Stückgüter in Förderrichtung F und ist vorzugsweise größer als diese maximale Dimension Sₘₐₓ. Die maximale Dimensionen Sₘₐₓ ist der maximal tolerierte Wert, den die tatsächliche Dimension Sᵢₛₜ jedes Stückguts 4 in Förderrichtung F aufweisen darf.

Sodann wird zumindest ein Stückgut 4 in der Aufnahme 6 aufgenommen, wie in Fig. 1 dargestellt (Schritt b). Falls gewünscht, kann auch eine Mehrzahl von Stückgütern 4 in der Aufnahme 6 aufgenommen werden, wie in Fig. 4 zu sehen.

Ist das zumindest eine Stückgut 4 in der Aufnahme 6 angeordnet, werden die erste und die zweite Begrenzungseinrichtung 8, 10 relativ zueinander parallel zur Förderrichtung F aufeinander zu bewegt, um das zumindest eine Stückgut 4 zu erfassen (Schritt c). Dabei werden die erste und die zweite Begrenzungseinrichtung 8, 10 aus dem in Fig. 1 dargestellten Zustand zunächst so weit bewegt, bis sie das zumindest eine Stückgut 4 kontaktieren, wie in Fig. 2 dargestellt. Insbesondere berühren das zumindest eine Klemmmittel 12 und das Begrenzungselement 18 dann das Stückgut 4. Der Abstand D der ersten und der zweiten Begrenzungseinrichtung 8, 10 entspricht jetzt der tatsächlichen Dimension Sᵢₛₜ des Stückguts. Bis zu diesem Zeitpunkt wird noch keine Kraft auf das aufgenommene Stückgut 4 ausgeübt und das Klemmmittel 12 weist parallel zur Förderrichtung F die erste Erstreckung L1 auf.

Die erste und die zweite Begrenzungseinrichtung 8, 10 werden, vorzugsweise kontinuierlich, weiter relativ zueinander in Förderrichtung F aufeinander zu bewegt. Das Klemmmittel 12, insbesondere das Klemmelement 13, und das Begrenzungselement 18 liegen aber an dem Stückgut 4 an und können deshalb nicht weiter aufeinander zu bewegt werden. Infolgedessen wird das elastische Element 14 des Klemmmittels 12 während der weiteren Bewegung der ersten und der zweiten Begrenzungseinrichtung durch das aufgenommene Stückgut 4 verformt (Schritt d), wie sich aus einer Zusammenschau der Fig. 2 und Fig. 3 ergibt. Das Verformen erfolgt, sobald der Abstand D der ersten und der zweiten Begrenzungseinrichtung 8, 10 kleiner oder gleich der tatsächlichen Dimension Sᵢₛₜ des Stückguts 4 in Förderrichtung F ist. Das elastische Element 14 wird dadurch vorzugsweise so stark verformt, dass das Klemmmittel 12 nach dem Bewegen der Begrenzungseinrichtungen 8, 10 relativ zueinander gemäß Schritt c) in Förderrichtung F die zweite Erstreckung L2 aufweist.

Durch das Verformen des elastischen Elements 14 des Klemmmittels 12 wird eine Haltekraft parallel zur Förderrichtung F auf das aufgenommene Stückgut 4 bewirkt (Schritt e). Die Haltekraft ist im Wesentlichen durch die Federeigenschaften des elastischen Elements 14 sowie durch die Differenz zwischen der ersten Erstreckung L1 und der zweiten Erstreckung L2 bestimmt, die dem Federweg X des elastischen Elements 14 bzw. des Klemmmittels 12 entspricht.

Die Fördervorrichtung 2 kann das zumindest eine Stückgut dann sicher und zuverlässig in Förderrichtung F fördern, wie in Fig. 3 dargestellt. Vorzugsweise bewegt die Fördervorrichtung 2 die Stückgüter erst in Förderrichtung F, wenn die Haltekraft auf die Stückgüter wirkt und die erste und die zweite Begrenzungseinrichtung 8, 10 vollständig aufeinander zu bewegt sind. Zumindest während der Schritte b) bis d) steht die Fördervorrichtung 2 vorzugsweise still. Allerdings kann mit der Bewegung in Förderrichtung F auch schon begonnen werden, sobald die erste und die zweite Begrenzungseinrichtung 8, 10 die Stückgüter berühren.

Um sicherzustellen, dass alle Stückgüter 4 eine ausreichende Haltekraft erfahren, werden die erste und die zweite Begrenzungseinrichtung 8, 10 insgesamt um einen Differenzbetrag aufeinander zu bewegt, der mindestens der Differenz aus dem ersten Abstand D1 und einer minimalen Dimension Sₘᵢₙ der Stückgüter 4 in Förderrichtung F entspricht. Die minimale Dimension Sₘᵢₙ ist der minimal tolerierte Wert, den die tatsächliche Dimension Sᵢₛₜ jedes Stückguts 4 in Förderrichtung F aufweisen darf. Dies ist in Fig. 3 durch die weitere Aufnahme 6' angedeutet, in der zur Veranschaulichung kein Stückgut 4 aufgenommen ist, das das Klemmmittel 12 zurückhält und dadurch das elastische Element 14 verformt. Die erste und die zweite Begrenzungseinrichtung 8, 10 werden folglich so weit bewegt, dass ihr Abstand D kleiner als die minimale Dimension Sₘᵢₙ der Stückgüter 4 ist. Dadurch wird erreicht, dass auch bei einem Stückgut, dessen tatsächliche Dimension Sᵢₛₜ der minimalen Dimension Sₘᵢₙ entspricht, das elastische Element 14 verformt wird und eine Haltekraft auf das Stückgut 4 bewirkt.

## Patentansprüche

1. Fördervorrichtung (2) zum Fördern von Stückgütern (4) in eine Förderrichtung (F), umfassend:
eine Mehrzahl von Aufnahmen (6) zur Aufnahme von jeweils zumindest einem Stückgut (4), wobei die Mehrzahl von Aufnahmen (6) in Förderrichtung (F) bewegbar und in Förderrichtung (F) hintereinander angeordnet ist;
wobei jede Aufnahme (6) der Mehrzahl von Aufnahmen (6) eine erste Begrenzungseinrichtung (8) und eine zweite Begrenzungseinrichtung (10) umfasst, die in Förderrichtung (F) hintereinander angeordnet sind und die jeweilige Aufnahme (6) parallel zur Förderrichtung (F) nach vorne und nach hinten begrenzen, wobei die erste Begrenzungseinrichtung (8) und die zweite Begrenzungseinrichtung (10) parallel zur Förderrichtung (F) relativ zueinander bewegbar sind;
wobei die erste Begrenzungseinrichtung (8) und/oder die zweite Begrenzungseinrichtung (10) zumindest ein Klemmmittel (12) aufweist, das die jeweilige Aufnahme (6) parallel zur Förderrichtung (F) im Bereich der ersten Begrenzungseinrichtung (8) bzw. zweiten Begrenzungseinrichtung (10) begrenzt und das ein elastisches Element (14) umfasst, das dazu eingerichtet ist, eine Haltekraft auf das zumindest eine Stückgut (4) auszuüben.

2. Fördervorrichtung (2) nach Anspruch 1, **dadurch gekennzeichnet, dass** ein Federweg (X) des elastischen Elements (14) des zumindest einen Klemmmittels (12) zumindest teilweise parallel zur Förderrichtung (F) ausgerichtet ist.

3. Fördervorrichtung (2) nach Anspruch 1 oder 2, **dadurch gekennzeichnet, dass** das zumindest eine Klemmmittel (12) ein Festkörpergelenk umfasst.

4. Fördervorrichtung (2) nach einem der vorangehenden Ansprüche, **dadurch gekennzeichnet, dass** das zumindest eine Klemmmittel (12) einen festgelegten ersten Abschnitt (20) und einen zweiten Abschnitt (22) umfasst, der relativ zum ersten Abschnitt (20) bewegbar, vorzugsweise schwenkbar ist.

5. Fördervorrichtung (2) nach Anspruch 4, **dadurch gekennzeichnet, dass** das zumindest eine Klemmmittel (12) einen Verbindungsabschnitt (24) umfasst, der den ersten und den zweiten Abschnitt (20, 22) bewegbar miteinander verbindet, einen geringeren Querschnitt als der erste und der zweite Abschnitt (20, 22) aufweist, und vorzugweise integral mit dem ersten und dem zweiten Abschnitt (20, 22) ausgebildet ist.

6. Fördervorrichtung (2) nach einem der vorangehenden Ansprüche, **dadurch gekennzeichnet, dass** die erste Begrenzungseinrichtung (8) und/oder die zweite Begrenzungseinrichtung (10), die das zumindest eine Klemmelement (12) aufweist, weiterhin ein Trägerelement (16) umfasst, das sich quer zur Förderrichtung (F) erstreckt, wobei das zumindest eine Klemmmittel (12) am Trägerelement (16) angebracht bzw. gelagert ist.

7. Fördervorrichtung (2) nach einem der vorangehenden Ansprüche, **dadurch gekennzeichnet, dass** das zumindest eine Klemmmittel (12) einen Kontaktabschnitt (40) zur Anlage an das zumindest eine Stückgut (4) aufweist und der Kontaktabschnitt (40) mit einem Verschleißschutz (42) ausgestattet ist.

8. Fördervorrichtung (2) nach einem der vorangehenden Ansprüche, **dadurch gekennzeichnet, dass** die erste Begrenzungseinrichtung (8) und/oder die zweite Begrenzungseinrichtung (10) eine Mehrzahl von Klemmmitteln (12) umfasst, die quer zur Förderrichtung (F) nebeneinander angeordnet ist.

9. Verfahren zum Fördern von Stückgütern (4) in eine Förderrichtung (F) mittels einer Fördervorrichtung (2), die eine Mehrzahl von in Förderrichtung (F) hintereinander angeordneten Aufnahmen (6) umfasst, mit folgenden Schritten:
a) Anordnen einer ersten Begrenzungseinrichtung (8) und einer zweiten Begrenzungseinrichtung (10) zumindest einer Aufnahme (6) der Mehrzahl von Aufnahmen (6), wobei ein Abstand (D) der ersten und der zweiten Begrenzungseinrichtung (8, 10) in Förderrichtung (F) einem ersten Abstand (D1) entspricht, wobei der erste Abstand (D1) mindestens einer maximalen Dimension (Sₘₐₓ) der Stückgüter (4) in Förderrichtung (F) entspricht;
b) Aufnehmen eines Stückguts (4) in der zumindest einen Aufnahme (6);
c) Bewegen der ersten Begrenzungseinrichtung (8) und der zweiten Begrenzungseinrichtung (10) relativ zueinander parallel zur Förderrichtung (F), wenn das Stückgut (4) in der zumindest einen Aufnahme (6) aufgenommen ist;
d) Verformen eines elastischen Elements (14) eines Klemmmittels (12) durch das aufgenommene Stückgut (4) während Schritt c), wobei die erste Begrenzungseinrichtung (8) und/oder die zweite Begrenzungseinrichtung (10) das Klemmmittel (12) aufweist und das Klemmmittel (12) die jeweilige Aufnahme (6) im Bereich der ersten Begrenzungseinrichtung (8) bzw. der zweiten Begrenzungseinrichtung (10) parallel zur Förderrichtung (F) begrenzt;
e) Erzeugen einer Haltekraft, die parallel zur Förderrichtung (F) auf das aufgenommene Stückgut (4) wirkt, durch das Verformen des elastischen Elements (14) des Klemmmittels (12) gemäß Schritt d).

10. Verfahren nach Anspruch 9, **dadurch gekennzeichnet, dass** Schritt c) das Bewegen der ersten Begrenzungseinrichtung (8) und der zweiten Begrenzungseinrichtung (10) um einen Differenzbetrag umfasst, der mindestens der Differenz aus dem ersten Abstand (D1) und einer minimalen Dimension (Sₘᵢₙ) der Stückgüter (4) in Förderrichtung (F) entspricht.

11. Verfahren nach Anspruch 9 oder 10, **dadurch gekennzeichnet, dass** Schritt d) erfolgt, sobald der Abstand (D) der ersten und der zweiten Begrenzungseinrichtung (8, 10) einer tatsächlichen Dimension (Sᵢₛₜ) des aufgenommenen Stückguts (4) in Förderrichtung (F) entspricht.

12. Verfahren nach einem der Ansprüche 9 bis 11, **dadurch gekennzeichnet, dass** die Haltekraft zwischen 0,5 N und 10 N, vorzugsweise zwischen 1N und 5 N, mehr bevorzugt zwischen 1 N und 3 N beträgt.

13. Verfahren nach einem der Ansprüche 9 bis 12, **dadurch gekennzeichnet, dass** eine tatsächliche Dimension (Sᵢₛₜ) der Stückgüter (4) in Förderrichtung (F) zwischen 10 mm und 200 mm, vorzugsweise zwischen 15 mm und 150 mm, mehr bevorzugt zwischen 20 mm und 100 mm beträgt.

14. Verfahren nach einem der Ansprüche 9 bis 13, **dadurch gekennzeichnet, dass** das elastische Element (14) vor Schritt c) eine erste Erstreckung (L1) parallel zur Förderrichtung (F) aufweist und das elastische Element (14) nach Schritt c) und d) eine zweite Erstreckung (L2) parallel zur Förderrichtung (F) aufweist, wobei eine Differenz zwischen der ersten Erstreckung (L1) und der zweiten Erstreckung (L2) einem Federweg (X) des elastischen Elements (14) parallel zur Förderrichtung (F) entspricht.

15. Verfahren nach einem der Ansprüche 9 bis 14, **dadurch gekennzeichnet, dass**
Schritt b) das Aufnehmen einer Mehrzahl von Stückgütern (4) umfasst, die quer zur Förderrichtung (F) nebeneinander angeordnet ist, wobei die erste Begrenzungseinrichtung (8) und/oder die zweite Begrenzungseinrichtung (12) eine Mehrzahl von Klemmmitteln (12) aufweist und jedem Stückgut (4) ein Klemmmittel (12) zugeordnet ist; und
Schritt d) das Verformen jedes elastischen Elements (14) der Mehrzahl von Klemmmitteln (12) durch jeweils das Stückgut (4) umfasst, dem das jeweilige Klemmmittel (12) zugeordnet ist.
